# EUROPÄISCHE PATENTSCHRIFT

(11) **EP 1 769 183 B1**
(45) Veröffentlichungstag und Bekanntmachung des Hinweises auf die Patenterteilung: **16.04.2008**
(21) Anmeldenummer: 05754469.4
(22) Anmeldetag: 04.07.2005
(51) Int. Cl.: F16L 25/00

(54) **VERBINDUNGS- UND ANSCHLUSSSTÜCK FÜR WELLROHRE**
CONNECTOR AND ADAPTER PIECE FOR CORRUGATED PIPES
PIECE DE RACCORDEMENT ET D'ASSEMBLAGE POUR TUBES ONDULES

(30) Priorität: 16.07.2004 CH 120504
(43) Veröffentlichungstag der Anmeldung: 04.04.2007
(73) Patentinhaber: PMA AG, 8610 Uster (CH)
(72) Erfinder: SCHWARZ, Ernst, CH-8604 Volketswil (CH)
(74) Vertreter: Bruderer, Werner
(86) Internationale Anmeldenummer: PCT/CH2005/000372
(87) Internationale Veröffentlichungsnummer: WO 2006/007744

(56) Entgegenhaltungen:
- EP-A- 0 499 885
- EP-A- 0 840 050
- DE-A1- 19 800 986
- US-A1- 2004 080 160

## Beschreibung

Die Erfindung betrifft ein Verbindungs- und Anschlussstück für lösbare Verbindungen mit Wellrohren, mit einem Spritzgussgehäuse aus Kunststoff, welches einen in Richtung des Umfanges ungeteilten, rohrförmigen Mantel mit einem Kernhohlraum sowie eine Eintrittsöffnung zum Einschieben eines Wellrohrendes in den Kernhohlraum sowie zur Durchführung von Kabeln aufweist und einem Verbindungsflansch sowie einem Verbindungsteil.

Wellrohre, bzw. Wellschläuche sind flexible Elemente, welche z.B. bei der Verlegung und zum Schutz von elektrischen und optischen Leitern in der Bauindustrie oder beim Anschluss von Maschinen oder anderen Geräten Verwendung finden. Ein besonders häufiges Anwendungsgebiet ist die Verwendung als flexibles Schutz- und Führungsrohr in der Fahrzeugindustrie. Die Wellrohre bestehen in den meisten Fällen aus Kunststoff, können jedoch auch aus Metall hergestellt sein. Für die Verbindung von Wellrohren miteinander und deren Anschluss an Geräte, Maschinen oder Einrichtungen sind Verbindungs- und Anschlussstücke notwendig, welche beispielsweise auch als Armaturen oder Einschraubstutzen bezeichnet werden.

Verbindungs- und Anschlussstücke, bzw. Anschlussarmaturen dieser Art sind in verschiedenen Ausführungsformen bekannt. Die Patentschrift CH 645 448 beschreibt beispielsweise eine Anschlussarmatur für einen flexiblen Wellschlauch. Diese Anschlussarmatur verfügt über ein Gehäuse mit einem ungeteilten, rohrförmigen Mantel mit einem Kernhohlraum, wobei ein Ende des Wellschlauches bzw. Wellrohres in diesen Kernhohlraum eingeschoben ist. An dem vom Kernhohlraum abgewendeten Ende des Gehäuses ist ein Verbindungsteil in der Form eines Schraubstutzens angeordnet und am hinteren Ende dieses Schraubstutzens weist das Gehäuse einen Verbindungsflansch auf. Dieser Schraubstutzen dient dazu, um die Armaturen durch Einschrauben in eine Gewindebohrung an einer Wandung eines Gehäuses mit diesem Gehäuse zu verbinden, oder der Schraubstutzen wird durch eine Bohrung durchgesteckt und an der Innenseite mit einer Mutter festgespannt. Das Gehäuse der Armatur wird durch Spritzgiessen aus einem Kunststoff, zumeist einem Thermoplast hergestellt. Zwischen dem Ende des Wellrohres und dem Mantel des Kernhohlraumes im Gehäuse ist eine Dichtungsmanschette eingelegt. Diese verhindert das Eindringen von Flüssigkeiten und anderen Fremdstoffen über die Verbindungsstelle. Diese Dichtung wird entweder vor dem Zusammenbau in den Kernhohlraum des Armaturengehäuses eingelegt oder über das Ende des Wellrohres geschoben und dann das Wellrohr und die Armaturen zusammengesteckt. Dabei besteht die Gefahr, dass diese Dichtung verloren geht oder durch unsachgemässes Einschieben des Rohrendes in die Armaturen die Dichtung deformiert und dadurch deren Wirkung beeinträchtigt wird. Die Feststellung und Sicherung des Wellrohrendes im Armaturengehäuse erfolgt durch ein Sperrelement, welches rechtwinklig zur Längsachse durch eine Öffnung im Gehäuse eingesteckt wird. Auch dieses Sperrelement kann verloren gehen oder bei mangelhafter Montage wieder herausfallen. Zudem kann das Sperrelement auch eingebaut werden, wenn das Rohrende nicht vollständig bis zum Anschlag in die Armatur eingesteckt wird. In einem solchen Fall ist die Dichtung nicht oder nur teilweise im Eingriff und die Verbindung ist nicht sachgemäss abgedichtet. Beim Zusammenbau muss das Zusammenfügen von mehreren Einzelteilen korrekt erfolgen, wodurch ein gewisser Montageaufwand entsteht. Verbindungs- und Anschlussstücke gemäss diesem Beispiel sind besonders geeignet für Verbindungen mit Wellrohren, welche hohen Ausreisskräften ausgesetzt sind.

Aus GB 2 107 814 ist eine weitere Ausführungsform einer Verbindungsarmatur für Wellrohre bekannt. Dabei bestehen die Verbindungsarmatur und das Wellrohr aus einem elastischen Material und sind somit beide elastisch deformierbar. In der Verbindungsarmatur ist ein Kernhohlraum vorgesehen, an dessen Mantelfläche umlaufende Rippen angeordnet sind, welche den Rippen an der Wellrohroberfläche entsprechen. Durch das Zusammenstecken des Wellrohrendes mit der Verbindungsarmatur greifen diese Rippen an den Mantelflächen ineinander und das Ende des Wellrohres wird als Folge der Elastizität der Materialien im Kernhohlraum der Verbindungsarmaturen gehalten und gleichzeitig abgedichtet. Diese Verbindung lässt sich in einfacher Weise zusammenfügen, kann jedoch in Längsrichtung nur geringe Ausreisskräfte aufnehmen. Sie ist deshalb nur für gering belastete Verbindungen geeignet. Zudem besteht die Gefahr, dass beim Abbiegen bzw. Abknicken des Wellrohres im Bereiche der Verbindung die Verbindungsarmatur deformiert wird und dadurch zwischen der Wellrohroberfläche und dem Kernhohlraum Öffnungen entstehen, welche die Dichtwirkung aufheben.

Aus Dokument EP-A-0499885 ist eine weitere Verbindungsarmatur für Wellrohre bekannt.

Es ist Aufgabe der Erfindung, ein Verbindungs- und Anschlussstück für Wellrohre zu schaffen, bei welchem keine Zusatzelemente zur Abdichtung und zur Sicherung der Verbindung notwendig sind, welches das Rohrende in Längsrichtung auch bei hohen Ausreisskräften sicher festhält und bei welchem die Dichtung zwischen Rohrende und Gehäuse auch bei Abbiegungen oder Abknickungen des Wellrohres im Bereiche der Verbindung nicht aufgehoben wird und die Dichtwirkung auch bei nicht vollständig eingestecktem Rohrende gewährleistet ist.

Diese Aufgabe wird durch die im kennzeichnenden Teil des Patentanspruches 1 definierten Merkmale gelöst. Vorteilhafte Weiterbildungen der Erfindung ergeben sich nach den Merkmalen der abhängigen Patentansprüche.

Das erfindungsgemässe Verbindungs- und Anschlussstück besteht aus einem in Richtung des Umfanges ungeteilten, rohrförmigen Gehäuse mit zwei Gehäuseteilen, welche als Zweikomponenten-Spritzgussteil einstückig miteinander verbunden sind. Diese Ausgestaltung erbringt den Vorteil, dass unterschiedliche Materialien eingesetzt werden können und die einzelnen Bereiche des Gehäuses, bzw. der beiden Gehäuseteile an unterschiedliche technische Anforderungen anpassbar sind. Ein erstes Gehäuseteil mit dem Verbindungsflansch ist aus einem thermoplastischen Kunststoff gebildet und bildet ein hartes Gehäuseteil. Ein zweites Gehäuseteil, welches im Wesentlichen gegen die Eintrittsöffnung für das Wellrohrende gerichtet ist, besteht aus einem thermoplastischen elastomeren Kunststoff und bildet ein elastisches Gehäuseteil. Da das zweite Gehäuseteil aus einem elastischen Material besteht, ermöglicht es einerseits die elastische, bzw. federnde Auslenkung von Teilbereichen des Gehäuses und anderseits kann mindestens ein Bereich des zweiten Gehäuseteiles mit Dichtungselementen ausgebildet werden, welche gegen den Kernhohlraum gerichtet sind. Das erfindungsgemässe Verbindungs- und Anschlussstück kann somit mit dem ersten Gehäuseteil grosse Kräfte aufnehmen und verleiht dem Anschlussstück die gewünschte Festigkeit. Mit dem zweiten Gehäuseteil wird gleichzeitig die elastische, bzw. federnde Auslenkung von Teilbereichen des zweiten, bzw. ersten Gehäuseteiles ermöglicht und die gewünschte Abdichtung zwischen dem Gehäuse und dem Ende des Wellrohres erwirkt. Zusatzelemente am ersten Gehäuseteil, welche in Richtung der Längsachse in das zweite Gehäuseteil eingreifen, bilden Verstärkungsrippen für dieses zweite Gehäuseteil. Durch unterschiedliche Ausgestaltung dieser Zusatzteile kann die Flexibilität bzw. Steifigkeit des zweiten Gehäuseteiles verändert werden. Es sind keine losen Zusatzelemente notwendig, um mit der erfindungsgemässen Verbindungs- und Anschlussarmatur sowohl eine hohe Festigkeit wie auch eine hohe Dichtwirkung zu erreichen. Da die Dichtungselemente direkt nach der Eintrittsöffnung in den Kernhohlraum angeordnet sind, wird die Verbindung zwischen Rohrende und Armatur bereits dann abgedichtet, wenn das Rohrende auch noch nicht vollständig in den Kernhohlraum eingeschoben ist.

Eine vorteilhafte Ausbildung des Erfindungsgegenstandes sieht vor, am ersten Gehäuseteil mindestens zwei in Richtung der Längsachse verlaufende, zungenförmige Mantelsegmente anzuordnen. Diese Mantelsegmente weisen an ihren freien Enden Rückhalteelemente auf, welche etwa rechtwinklig zur Längsachse gerichtet sind und deren innere Bereiche in den Kernhohlraum ragen. Diese Mantelsegmente mit den Rückhalteelementen dienen als Feststellungselemente für das Rohrende, welches in den Kernhohlraum eingeschoben ist. Die Endbereiche, welche in den Kernhohlraum ragen, greifen in die Wellentäler am Mantel des Wellrohres ein und bewirken dadurch eine erhöhte Auszugsfestigkeit der Verbindung zwischen Wellrohr und Anschlussstück. Die zungenförmigen Mantelsegmente sind mindestens teilweise vom elastischen Kunststoff des zweiten Gehäuseteils umschlossen und die Endbereiche der Mantelsegmente können deshalb etwa rechtwinklig zur Längsachse des Gehäuses, d. h. radial federnd bewegt werden. Da die beweglichen zungenförmigen Mantelsegmente vollständig und einstückig mit dem elastischen Material des zweiten Gehäuseteiles verbunden sind, besteht keine Öffnung im Gehäuse und auch im Bereiche dieser Mantelsegmente ist das Gehäuse vollständig abgedichtet. Eine besonders hohe Festigkeit gegen Auszugskräfte, welche am Wellrohr wirken, wird erreicht, wenn die freien Enden der zungenförmigen Mantelsegmente in Richtung der Längsachse gegen den Verbindungsflansch des ersten Gehäuseteiles gerichtet sind. Bei dieser Anordnung kann das Ende des Wellrohres leicht in den Kernhohlraum des Gehäuses eingeschoben werden. Ein Herausziehen ist jedoch nur unter grosser Krafteinwirkung möglich.

Eine weitere Ausbildung der Erfindung sieht vor, an den freien Enden der zungenförmigen Mantelsegmente Greifelemente anzuordnen, welche nach aussen gerichtet sind. Diese Greifelemente sind so ausgebildet, dass sie mit einem Hilfswerkzeug erfasst und mit Hilfe dieses Werkzeuges die Mantelsegmente radial nach aussen gezogen werden können. Dadurch können die Rückhalteelemente aus dem Wellrohr ausgerückt werden. Dies ermöglicht ein Trennen des Wellrohres und des Anschlussstückes mit reduzierten Auszugskräften und erlaubt bei Bedarf eine erleichterte Demontage der Verbindung.

Es ist auch vorteilhaft, an einer Radialfläche des Verbindungsflansches, welche gegen das Verbindungsteil gerichtet ist, einen Dichtungsring aus dem thermoplastischen elastomeren Kunststoff des zweiten Gehäuseteiles anzuspritzen. Dieser Dichtungsring ersetzt dann eine zusätzlich einzulegende Dichtung, wie sie bei Schraubverbindungen notwendig ist. Bei dieser Ausgestaltung ist der Dichtungsring ebenfalls einstückig mit dem Gehäuse verbunden. Besondere Vorteile ergeben sich, wenn der Verbindungsflansch am ersten Gehäuseteil axiale Durchbrüche aufweist und diese Durchbrüche beim Spritzen des Gehäuses im Zweikomponentenverfahren ebenfalls mit dem thermoplastischen elastomeren Kunststoff ausgefüllt werden. Dadurch werden der Dichtungsring und das zweite Gehäuseteil miteinander verbunden und alle Elemente bilden ein einstückiges Gehäuse.

Eine zweckmässige Ausgestaltung des Erfindungsgegenstandes sieht vor, als thermoplastischen Kunststoff für das erste Gehäuseteil einen Kunststoff aus der Gruppe der Polyamide (PA) oder aus der Gruppe der Polypropylene (PP) einzusetzen. Diese Materialien weisen eine hohe Festigkeit und Zähigkeit auf und sind besonders geeignet für die Verwendung bei Verbindungs- und Anschlussstücken. Für den thermoplastischen elastomeren Kunststoff des zweiten Gehäuseteiles erweisen sich Kunststoffe aus der Gruppe der Polyurethan Elastomere (TPE-U) oder der Olefin Elastomere (TPE-O) oder der Amid Elastomere (TPE-A) oder ein vernetztes thermoplastisches Elastomer (TPE-X) als besonders zweckmässig. Diese Materialien lassen sich im Zweikomponenten-Spritzgussverfahren vorteilhaft mit den Materialien des ersten Gehäuseteiles verarbeiten. Dabei ist dieses Spritzgussverfahren an sich bekannt.

Erfindungsgemäss wird weiter vorgeschlagen, den Bereich mit den Dichtungselementen am zweiten Gehäuseteil zwischen der Eintrittsöffnung des Kernhohlraumes und den radialen Rückhalteelementen an den Mantelsegmenten des ersten Gehäuseteiles anzuordnen. Die Dichtungselemente sind dabei um den ganzen Umfang des Kernhohlraumes angeordnet und bilden geschlossene radiale Dichtungselemente. Diese Dichtungselemente haben die gewünschte Dichtungsfunktion, ermöglichen aber gleichzeitig ein Festklemmen und Festhalten des Wellrohrendes im Kernhohlraum des Gehäuses. Diese Anordnung führt zu einer verbesserten Qualität der Dichtungsfunktion. Die Verbindung zwischen Wellrohrende und Armatur ist auch dann abgedichtet, wenn das Wellrohrende nicht vollständig in die Armatur eingesteckt ist. Die Dichtwirkung besteht auch dann, wenn nur eine Rippe des Wellrohres in die Rückhalteelemente eingreift. Durch entsprechende Formgestaltung und Wahl der Abmessungen dieser Dichtungselemente kann die gewünschte Dichtungs- und Haltekraft der Verbindung in einem weiten Bereich an unterschiedliche Einsatzbedingungen angepasst werden.

Eine weitere Ausbildung der Erfindung sieht vor, um die Eintrittsöffnung des Kernhohlraumes einen starren Mantelring anzuordnen, wobei dieser Mantelring über Längsrippen mit dem ersten Gehäuseteil verbunden und aus dem gleichen thermoplastischen Kunststoff gebildet ist. Durch diese Anordnung wird der Vorteil erreicht, dass beim Abbiegen oder Abknicken des Wellrohres im Bereiche der Verbindung der elastische zweite Gehäuseteil nicht deformiert werden kann. Dadurch wird sichergestellt, dass die Dichtwirkung zwischen Wellrohr und Gehäuse nicht negativ beeinflusst wird.

Mit dem erfindungsgemässen Verbindungs- und Anschlussstück lassen sich somit in einfacher Weise erhebliche Vorteile erwirken. Es sind keine losen Teile vorhanden, welche bei der Montage der Verbindung verloren gehen können oder versehentlich nicht montiert werden. Alle notwendigen Halte- und Dichtungselemente sind an den zwei Gehäuseteilen des einstückigen Gehäuses angeordnet und fest damit verbunden. Die Verbindung zwischen Rohrende und Verbindungs- und Anschlussstück vermag grosse Auszugskräfte in Achsrichtung aufzunehmen und ist auch gegen Abbiegungen des Wellrohres widerstandsfähig. Die Dichtwirkung zwischen dem Ende des Wellrohres und dem Kernhohlraum am Verbindungs- und Anschlussstück bleibt auch unter hohen Belastungen und schwierigen Einsatzbedingungen erhalten, aber auch dann, wenn das Rohrende nicht vollständig in die Armatur eingesteckt ist. Die Montage wird erheblich erleichtert, da die Verbindung nur zusammengesteckt werden muss und keine Zusatzteile benötigt werden.

Im Folgenden wird die Erfindung anhand von Ausführungsbeispielen unter Bezugnahme auf die beiliegenden Zeichnungen näher erläutert. Es zeigen:
- Fig. 1: ein erfindungsgemässes Verbindungs- und Anschlussstück in einer Seitenansicht mit Teilschnitt,
- Fig. 2: das Verbindungs- und Anschlussstück gemäss Fig. 1 in perspektivischer Ansicht,
- Fig. 3: das Verbindungs- und Anschlussstück gemäss Fig. 1 in Verbindung mit einem Wellrohr,
- Fig. 4: ein erfindungsgemässes Verbindungs- und Anschlussstück mit einer zweiten Ausführungsform von Rückhalteelementen, und
- Fig. 5: ein erfindungsgemässes Verbindungs- und Anschlussstück für nicht dynamisch belastete Verbindungen.

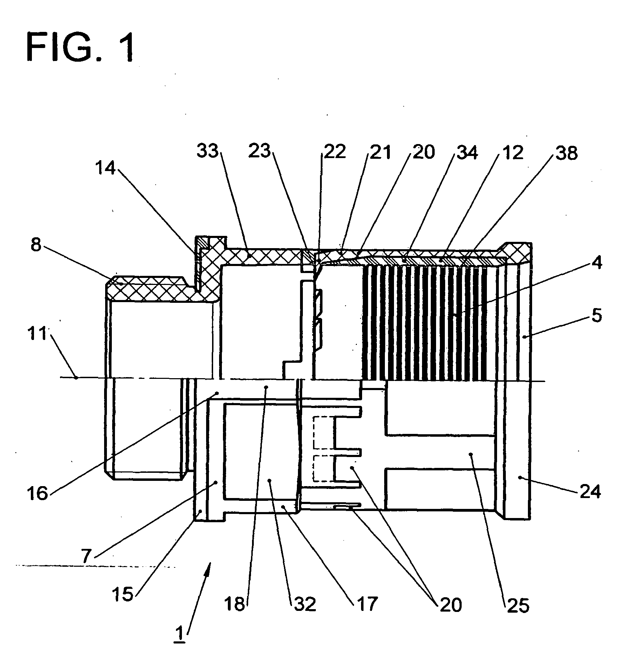

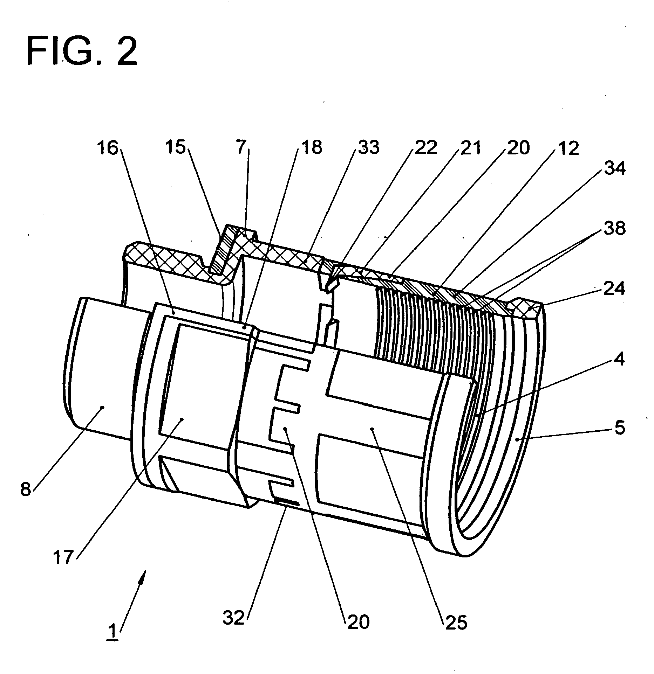

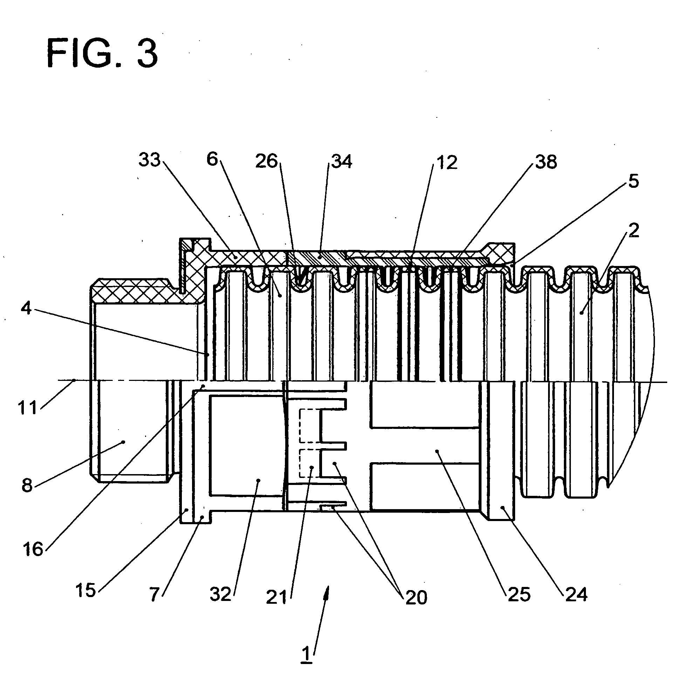

Die Figuren 1,2 und 3 zeigen das gleiche erfindungsgemässe Verbindungs- und Anschlussstück 1. Dabei zeigt Fig. 1 eine Seitenansicht mit einem Teil-Längsschnitt, Fig. 2 eine perspektivische Ansicht mit einem Teil-Längsschnitt und Fig.3 das Verbindungs- und Anschlussstück 1 in Verbindung mit einem Wellrohr 2. Das Anschlussstück 1 besteht aus einem Spritzgussgehäuse 32, welches ein erstes Gehäuseteil 33 und ein zweites Gehäuseteil 34 umfasst. Das erste Gehäuseteil 33 besteht aus einem thermoplastischen Kunststoff, im dargestellten Beispiel aus einem Polyamid (PA). Das zweite Gehäuseteil 34 besteht aus einem thermoplastischen elastomeren Kunststoff, im dargestellten Beispiel aus einem Amid Elastomer (TPE-A). Die beiden Gehäuseteile 33 und 34 werden mittels Zweikomponenten-Spritzgussverfahren hergestellt und bilden nach dem Spritzgiessen das einstückige in Richtung des Umfanges ungeteilte Spritzgussgehäuse 32.

Das erste Gehäuseteil 33 umfasst ein Verbindungsteil 8 und einen daran anschliessenden Verbindungsflansch 7 und ein Mantelstück 17. Das Verbindungsteil 8 besteht im dargestellten Beispiel aus einem Schraubstutzen, kann aber auch durch ein Winkelstück, eine Verzweigung oder ein anderes an sich bekanntes Verbindungsteil gebildet sein. Das Mantelstück 17 umschliesst einen Teil eines Kernhohlraumes 4, welcher für die Aufnahme eines Endes 6 eines Wellrohres 2 bestimmt ist. Das Mantelstück 17 weist an dem gegen das Wellrohr 2 gerichteten Ende Zusatzteile in der Form eines Mantelrings 24 auf, welcher über Längsrippen 25 mit den übrigen Bereichen des Mantelstücks 17 verbunden ist. An dem gegen den Verbindungsflansch 7 gerichteten Ende ist das Mantelstück 17 in an sich bekannter Weise so ausgebildet, dass Montagewerkzeuge in Eingriff gebracht werden können. Zwischen dem Verbindungsflansch 7 und dem Mantelring 24 ist das Mantelstück 17 gitterartig ausgebildet und weist mindestens zwei zungenförmige Mantelsegmente 20 auf. Im dargestellten Beispiel sind mehrere paarweise Gruppen von derartigen Mantelsegmenten 20 vorhanden. Die zungenförmigen Mantelsegmente 20 weisen freie Enden 21 auf, welche in Richtung der Längsachse 11 gegen den Verbindungsflansch 7 gerichtet sind. An den freien Enden 21 sind Rückhalteelemente 22 ausgebildet, welche etwa rechtwinklig zur Längsachse 11 gerichtet sind und deren innere Endbereiche 23 in den Kernhohlraum 4 ragen. Wenn das Ende 6 des Wellrohres 2 in den Kernhohlraum 4 eingesteckt ist, greifen diese Rückhalteelemente 22 in ein Wellental 26 am Mantel des Wellrohres 2 ein. Beim Einschieben des Wellrohres 2 durch die Eintrittsöffnung 5 in den Kernhohlraum 4 können die Rückhalteelemente 22 radial nach aussen ausgelenkt werden, da die zungenförmigen Mantelsegmente 20 Federelemente bilden.

In den gitterförmigen Bereich des ersten Gehäuseteiles 33 ist das zweite Gehäuseteil 34 eingespritzt und bildet in diesem Bereich ebenfalls eine gitterförmige Gehäusestruktur. Dabei ist an diesem zweiten Gehäuseteil 34 ein Bereich 12 ausgebildet, welcher gegen den Kernhohlraum 4 gerichtete Dichtungselemente 38 aufweist. Dieser Bereich 12 und die Dichtungselemente 38 erstrecken sich dabei im Wesentlichen von der Eintrittsöffnung 5 des Kernhohlraumes 4 zu den radialen Rückhalteelementen 22. Die Dichtungselemente 38 sind als Rippen ausgebildet, welche einen kleineren Innendurchmesser aufweisen als der Aussendurchmesser des Wellrohres 2 beträgt. In Richtung der Längsachse 11 sind mehrere derartige Rippen hintereinander angeordnet, wobei jede der Rippen geschlossen um den ganzen Umfang des Kernhohlraumes 4 verläuft. Im dargestellten Beispiel sind mindestens zehn derartige voneinander beabstandete Rippen vorhanden, welche gemeinsam mit dem Mantel des Wellrohres 2 eine LabyrinthDichtung bilden. Da das zweite Gehäuseteil 34 aus einem Elastomer besteht, sind auch die Dichtungselemente 38 elastisch und verstärken die Dichtungswirkung. Gleichzeitig wird das Ende 6 des Wellrohres 2 durch die Vielzahl der Dichtungselemente 38 im Kernhohlraum 4 gehalten und es bedarf bereits einer relativ grossen Auszugskraft in Richtung der Längsachse 11, um das Rohrende 6 und das Anschlussstück 1 voneinander zu trennen. Die Dichtungselemente 38 sind auch dann wirksam, wenn das Ende 6 des Wellrohres 2 nicht vollständig in den Kernhohlraum 4 eingesteckt ist. Es besteht die volle Dichtwirkung, auch wenn die Rückhalteelemente 22 nur in das vorderste Wellental 26 am Wellrohr 2 eingreifen.

An der gegen das Verbindungsteil 8 gerichteten Radialfläche 14 des Verbindungsflansches 7 ist ein Dichtungsring 15 angespritzt. Dieser Dichtungsring 15 besteht aus dem gleichen thermoplastischen elastomeren Material wie das zweite Gehäuseteil 34. Im Verbindungsflansch 7 ist mindestens ein Durchbruch 16 angeordnet, durch welchen sich ein Steg 18 erstreckt. Dieser Steg 18 verbindet den Dichtungsring 15 mit dem zweiten Gehäuseteil 34. Mit Hilfe dieser Anordnung kann der Dichtungsring 15 gleichzeitig mit dem zweiten Gehäuseteil 34 angespritzt werden.

Da das erste Gehäuseteil 33 und das zweite Gehäuseteil 34 gemeinsam das einstückige Spritzgussgehäuse 32 bilden, sind die zungenförmigen Mantelsegmente 20 mindestens teilweise von elastischem Kunststoff des zweiten Gehäuseteiles 34 umschlossen. Dadurch wird gewährleistet, dass der Kernhohlraum 4 nach aussen vollständig abgedichtet ist und gleichzeitig die zungenförmigen Mantelsegmente 20 als Federelemente wirken können. Durch Veränderung der geometrischen Form der Rippen 25 und der Gitterstruktur des ersten, bzw. zweiten Gehäuseteiles 33, bzw. 34 kann die Steifigkeit des Spritzgussgehäuses 32 im Bereiche des Kernhohlraumes 4 verändert werden. Im dargestellten Beispiel sind die Versteifungsrippen 25 und der Mantelring 24 so gestaltet, dass beim Abbiegen des Wellrohres 2 im Bereiche der Verbindung zum Anschlussteil 1 keine unzulässigen Deformationen des Anschlussteiles 1 auftreten, welche die Dichtigkeit der Verbindung negativ beeinflussen könnten. Die hier dargestellte Ausführungsform ist deshalb insbesondere für die Verbindung von Wellrohren 2 mit Anschlussarmaturen 1 geeignet, welche hohen Auszugskräften und dynamischen Belastungen ausgesetzt sind und gleichzeitig eine hohe Dichtigkeit gegen das Eindringen von Fremdstoffen aufweisen müssen.

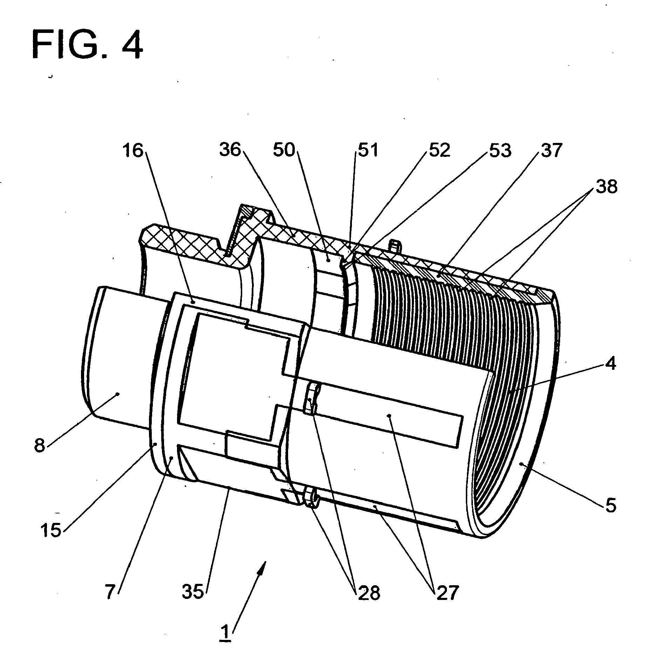

Fig. 4 zeigt eine zweite Ausführungsform des erfindungsgemässen Verbindungs- und Anschlussstücks 1, welches ein Spritzgussgehäuse 35 aufweist. Dieses Spritzgussgehäuse 35 ist ebenfalls durch Zweikomponenten-Spritzgiessen einstückig aus einem ersten Gehäuseteil 36 und einem zweiten Gehäuseteil 37 gebildet. Bei dieser Ausführungsform erstrecken sich die zungenförmigen Mantelsegmente 50 ebenfalls in Richtung der Längsachse 11, wobei die freien Enden 51 der Mantelsegmente 50 vom Verbindungsflansch 7 weggerichtet sind. An den freien Enden 51 der zungenförmigen Mantelsegmente 50 sind auch hier Rückhalteelemente 52 mit inneren Endbereichen 53 angeordnet. Diese inneren Endbereiche 53 ragen in den Kernhohlraum 4 und rasten beim Einschieben des Endes 6 eines Wellrohres 2 in eines der Wellentäler 26 am Mantel des Wellrohres 2 ein. Die zungenförmigen Mantelsegmente 50 bilden Federelemente, wodurch die Rückhalteelemente 52 in radialer Richtung ausgelenkt werden können. An dem gegen die Eintrittsöffnung 5 des Kernhohlraumes 4 gerichteten Ende des ersten Gehäuseteiles 36 sind Versteifungsrippen 27 angeordnet, welche den elastischen Bereich des zweiten Gehäuseteiles 37 verstärken. Bei dieser Ausgestaltung sind weniger grosse Einstosskräfte notwendig, um das Ende 6 des Wellrohres 2 vollständig in den Kernhohlraum 4 einzuschieben. Dies ist eine Folge des Umstandes, dass sich der gegen die Eintrittsöffnung 5 gerichtete Teil des Gehäuses 35 elastisch an den Aussendurchmesser des Wellrohres 2 anpassen kann. Diese Ausführungsform wird normalerweise nicht für dynamisch hoch belastete Verbindungen eingesetzt. Sie gewährt aber trotzdem im normalen Anwendungsbereich eine genügende Steifigkeit, welche auch die Dichtwirkung zwischen den Dichtungselementen 38 und dem Mantel des Wellrohres 2 aufrechterhält und gewährleistet. Auch bei dieser Ausführungsform ist die Dichtwirkung gewährleistet, wenn das Rohrende 6 nicht bis zum Anschlag in den Kernhohlraum 4 eingeschoben ist. Diese Ausführungsform eines Anschlussstücks 1 ist etwas kostengünstiger herstellbar, gewährleistet aber eine hohe Sicherheit gegen das Ausreissen des Wellrohres 2 und gleichzeitig eine gute Dichtungswirkung. Die übrigen Bauteile des Spritzgussgehäuses 35 sind im Wesentlichen gleich ausgestaltet wie beim Ausführungsbeispiel gemäss Fig. 1. Dies sind insbesondere das Verbindungsteil 8, der Verbindungsflansch 7 und der angespritzte Dichtungsring 15. Es finden auch die gleichen Materialien Verwendung. Bei der Ausführungsform gemäss Fig. 4 weisen die Mantelsegmente 50 nach aussen gerichtete Greifelemente 28 auf. Diese Greifelemente 28 sind so geformt, dass ein Hilfswerkzeug in Eingriff gebracht werden kann. Sie weisen beispielsweise Bohrungen auf, in welche die Spitzen eines Spreizwerkzeuges eingreifen können. Mit diesem Werkzeug können die Mantelsegmente 50 bei Bedarf radial nach aussen gezogen werden. Dadurch werden die Rückhalteelemente 52 aus dem Mantel des Wellrohres 2 ausgerückt und deren Sperrwirkung aufgehoben. Dies erleichtert das Trennen des Wellrohres 2 vom Anschlusselement 1, sofern dies notwendig sein sollte. Gleichartige Greifelemente 28 können auch an den Mantelsegmenten 20 gemäss der Ausführungsform der Fig. 1-3 angeordnet sein.

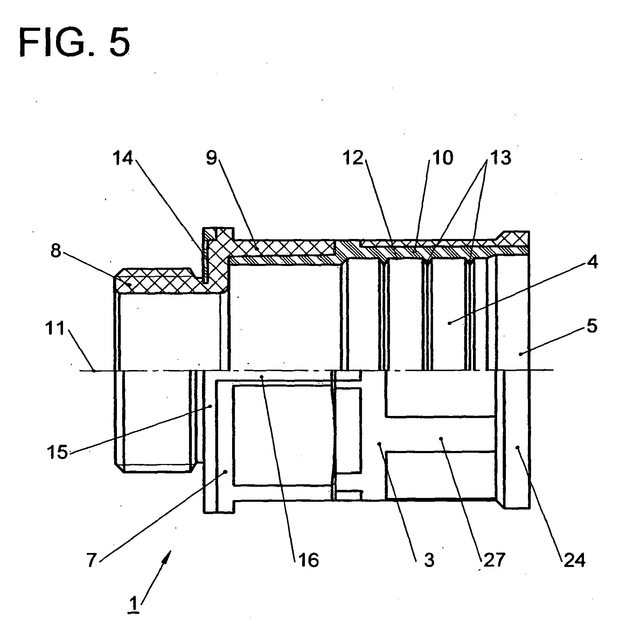

Fig. 5 zeigt eine einfachere Ausführungsform des erfindungsgemässen Verbindungs- und Anschlussstücks 1. Ein Spritzgussgehäuse 3 besteht auch hier aus einem ersten Gehäuseteil 9 und einem zweiten Gehäuseteil 10. Das erste harte Gehäuseteil 9 besteht aus einem thermoplastischen Kunststoff, bevorzugt Polyamid (PA), und das zweite Gehäuseteil aus einem Elastomer, bevorzugt einem Amid Elastomer (TPE-A). Beide Gehäuseteile 9 und 10 werden mittels Zweikomponenten-Spritzgiessverfahren miteinander verbunden und bilden das einstückige Spritzgussgehäuse 3. Das zweite Gehäuseteil 10 weist einen Bereich 12 mit Dichtungselementen 13 auf. Bei dieser Ausführungsform sind diese Dichtungselemente 13 jedoch so ausgebildet, dass sie einerseits die Dichtungsfunktion gegenüberdem Mantel des Wellrohres 2 gewährleisten und anderseits elastisch so stark in die Wellentäler am Mantel des Wellrohres 2 eingreifen, dass eine genügend grosse Rückhaltekraft gegen das Ausziehen des Wellrohres 2 aus dem Anschlussstück 1 erzeugt wird. Da die Wandstärke des Gehäuseteiles 10 und auch der gewählte thermoplastische elastomere Kunststoff verändert werden können, sind Anpassungen der Dichtwirkung und der Rückhaltekraft an verschiedene Betriebsbedingungen möglich. Das erste Gehäuseteil 9 weist auch hier einen Verbindungsflansch 7 und ein Verbindungsteil 8 auf. An der gegen das Verbindungsteil 8 gerichteten Radialfläche 14 des Verbindungsflansches 7 ist ebenfalls ein Dichtungsring 15 angespritzt und über einen axialen Durchbruch 16 mit dem zweiten Gehäuseteil 10 verbunden. Unzulässige oder unerwünschte Deformationen des zweiten Gehäuseteiles 10 werden durch Zusatzteile des ersten Gehäuseteiles 9 verhindert, welche in das zweite Gehäuseteil eingreifen. Bei diesen Zusatzteilen handelt es sich im dargestellten Beispiel um mehrere axial gerichtete Versteifungsrippen 27 und um einen Mantelring 24. Diese Zusatzteile können auch andere geometrische Formen aufweise, wodurch sich die Steifigkeit bzw. die Elastizität des zweiten Gehäuseteiles 10 in einem weiten Bereich verändern lässt. Im dargestellten Beispiel wirken die Versteifungsrippen 27 als radiale Federn und wirken mit den Dichtungselementen 13 zusammen. Dieses Ausführungsbeispiel eines erfindungsgemässen Verbindungs- und Anschlussstücks 1 ist besonders kostengünstig herstellbar und für Verbindungen mit Wellrohren 2 geeignet, bei welchen keine hohen Ausreisskräfte in Richtung der Längsachse 11 auftreten.

Bei allen drei Ausführungsbeispielen gemäss den Figuren 1 bis 3, bzw. 4, bzw. 5 sind keine zusätzlichen Montageteile notwendig. Alle notwendigen Bauteile sind einstückig an den Spritzgussgehäusen 3, bzw. 32, bzw. 35 angeordnet, wodurch die Verbindung des Wellrohres 2 mit diesen Anschlussstücken 1 vereinfacht wird. Durch veränderte Ausgestaltung im Rahmen der beschriebenen Ausführungsbeispiele kann ein weiter Bereich von Anwendungen für derartige Verbindungs- und Anschlussstücke 1 abgedeckt werden. Die einzelnen Ausführungsformen lassen sich an die auftretenden Ausreisskräfte und die dynamischen Krafteinwirkungen anpassen, wobei insbesondere die Ausführungsform gemäss den Figuren 1 bis 3 einen hohen Widerstand gegen das Ausreissen des Rohres und eine sehr gute Dichtungswirkung aufweist. Die Dichtwirkung zwischen Wellrohr 2 und Anschlussstück 1 wird in jedem Fall erreicht, auch wenn das Ende 6 des Wellrohres 2 nicht vollständig in das Anschlussstück 1 eingeschoben, bzw. eingesteckt ist.

## Patentansprüche

1. Verbindungs- und Anschlussstück (1) für lösbare Verbindungen mit Wellrohren (2), mit einem Spritzgussgehäuse (3; 32; 35) aus Kunststoff, welches einen in Richtung des Umfanges ungeteilten, rohrförmigen Mantel mit einem Kernhohlraum (4) sowie eine Eintrittsöffnung (5) zum Einschieben eines Wellrohrendes (6) in den Kernhohlraum (4) sowie zur Durchführung von Kabeln aufweist und einem Verbindungsflansch (7) sowie einem Verbindungsteil (8), **dadurch gekennzeichnet, dass** das ungeteilte, rohrförmige Gehäuse (3; 32; 35) in Richtung der Längsachse (11) aus zwei Gehäuseteilen (9, 10; 33, 34; 36, 37) besteht, welche als Zweikomponenten-Spritzgussteil einstückig miteinander verbunden sind, wobei ein erstes, hartes Gehäuseteil (9; 33; 36) mit dem Verbindungsflansch (7) aus einem thermoplastischen Kunststoff gebildet ist und ein zweites, elastisches Gehäuseteil (10; 34; 37), welches im Wesentlichen gegen die Eintrittsöffnung (5) für das Wellrohrende (6) gerichtet ist, aus einem thermoplastischen elastomeren Kunststoff besteht, Zusatzteile des ersten Gehäuseteiles (9; 33; 36) in Richtung der Längsachse (11) in das zweite Gehäuseteil (10; 34; 37) eingreifen und Versteifungsrippen (24, 25, 27) für dieses zweite Gehäuseteil (10; 34; 37) bilden und das zweite Gehäuseteil (10; 34; 37) mindestens einen Bereich (12) mit gegen den Kernhohlraum gerichteten Dichtungselementen (13) aufweist.

2. Verbindungs- und Anschlussstück für Wellrohre nach Patentanspruch 1, **dadurch gekennzeichnet, dass** das erste Gehäuseteil mindestens zwei, in Richtung der Längsachse verlaufende, zungenförmige Mantelsegmente (20; 50) aufweist und diese Mantelsegmente (20; 50) an ihren freien Enden (21; 51) Rückhalteelemente (22; 52) aufweisen, welche etwa rechtwinklig zur Längsachse (11) gerichtet sind und deren innere Endbereiche (23; 53) in den Kernhohlraum (4) ragen.

3. Verbindungs- und Anschlussstück für Wellrohre nach Patentanspruch 1 oder 2, **dadurch gekennzeichnet, dass** an einer Radialfläche (14) des Verbindungsflansches (7), welche gegen das Verbindungsteil (8) gerichtet ist, ein Dichtungsring (15) aus dem thermoplastischen elastomeren Kunststoff des zweiten Gehäuseteils (10; 34; 37) angespritzt ist.

4. Verbindungs- und Anschlussstück für Wellrohre nach einem der Patentansprüche 1 bis 3, **dadurch gekennzeichnet, dass** der thermoplastische Kunststoff ein Kunststoffes der Gruppe der Polyamide (PA) oder der Polypropylene (PP) ist.

5. Verbindungs- und Anschlussstück für Wellrohre nach einem der Patentansprüche 1 bis 4, **dadurch gekennzeichnet, dass** der thermoplastische elastomere Kunststoff ein Kunststoff aus der Gruppe der Polyurethan Elastomere (TPE-U) oder der Olefin Elastomere (TPE-O) oder der Amid Elastomere (TPE-A) oder ein vernetztes thermoplastisches Elastomer (TPE-X) ist.

6. Verbindungs- und Anschlussstück für Wellrohre nach einem der Patentansprüche 2 bis 5, **dadurch gekennzeichnet, dass** sich die Dichtungselemente (13; 38) am zweiten Gehäuseteil (10; 34; 37), zwischen der Eintrittsöffnung (5) des Kernhohlraumes (4) und den radialen Rückhalteelementen (22; 52) an den Mantelsegmenten (20; 50) erstrecken, wobei die Dichtungselemente (13; 38) geschlossen um den ganzen Umfang des Kernhohlraumes (4) angeordnet sind.

7. Verbindungs- und Anschlussstück für Wellrohre nach einem der Patentansprüche 1 bis 6, **dadurch gekennzeichnet, dass** um die Eintrittsöffnung (5) ein starrer Mantelring (24) angeordnet ist und dieser Mantelring (24) über Längsrippen (25) mit dem ersten Gehäuseteil (33) verbunden und aus dem gleichen thermoplastischen Kunststoff gebildet ist.

8. Verbindungs- und Anschlussstück für Wellrohre nach Patentanspruch 2, **dadurch gekennzeichnet, dass** die zungenförmigen Mantelsegmente (20; 50) mindestens teilweise vom elastischen Kunststoff des zweiten Gehäuseteils (34; 37) umschlossen sind und die freien Enden (21; 51) in radialer Richtung federnd bewegbar sind.

9. Verbindungs- und Anschlussstück für Wellrohre nach Patentanspruch 3, **dadurch gekennzeichnet, dass** der Verbindungsflansch (7) am ersten Gehäuseteil (9; 33; 36) axiale Durchbrüche (16) aufweist, diese Durchbrüche (16) mit thermoplastischem elastomeren Kunststoff ausgefüllt sind und der Dichtungsring (15) und das zweite Gehäuseteil (10; 34; 37) einstückig miteinander verbunden sind.

10. Verbindungs- und Anschlussstück für Wellrohre nach Patentanspruch 2, **dadurch gekennzeichnet, dass** die freien Enden (21) der zungenförmigen Mantelsegmente (20), in Richtung der Längsachse (11), gegen den Verbindungsflansch (7) des ersten Gehäuseteiles (33) gerichtet sind.

11. Verbindungs- und Anschlussstück für Wellrohre nach Patentanspruch 2, **dadurch gekennzeichnet, dass** an den freien Enden (21; 51) der zungenförmigen Mantelsegmente (20; 50) nach aussen gerichtete Greifelemente (27) angeordnet sind.

## Claims

1. Connecting and attachment piece (1) for releasable connections to corrugated tubes (2), said piece having an injection-moulded housing (3; 32; 35) made of plastics material which has a tubular jacket, which is undivided in the direction of the circumference, with a core cavity (4), and also has an inlet aperture (5) for inserting an end (6) of a corrugated tube in the core cavity (4) and for passing through cables, said connecting and attachment piece also having a connecting flange (7) and a connecting part (8), **characterised in that** the undivided, tubular housing (3; 32; 35) consists, in the direction of the longitudinal axis (11), of two housing parts (9, 10; 33, 34; 36, 37) which are connected to one another in one piece as a two-component injection-moulded part, wherein a first, rigid housing part (9; 33; 36) having the connecting flange (7) is formed from a thermoplastic plastics material and a second, elastic housing part (10; 34; 37), which is directed substantially towards the inlet aperture (5) for the end (6) of the corrugated tube, consists of a thermoplastic elastomeric plastics material; auxiliary parts of the first housing part (9; 33; 36) engage in the second housing part (10; 34; 37) in the direction of the longitudinal axis (11) and form reinforcing ribs (24, 25, 27) for this second housing part (10; 34; 37); and the second housing part (10; 34; 37) has at least one region (12) having sealing elements (13) which are directed towards the core cavity.

2. Connecting and attachment piece for corrugated tubes according to patent claim 1, **characterised in that** the first housing part has at least two tongue-shaped jacket segments (20; 50) which extend in the direction of the longitudinal axis, and these jacket segments (20; 50) have, at their free ends (21; 51), retaining elements (22; 52) which are directed approximately at right angles to the longitudinal axis (11) and the inner end regions (23; 53) of which project into the core cavity (4).

3. Connecting and attachment piece for corrugated tubes according to patent claim 1 or 2, **characterised in that** a sealing ring (15) made of the thermoplastic elastomeric plastics material of the second housing part (10; 34; 37) is injection-moulded onto a radial face (14) of the connecting flange (7), which face is directed towards the connecting part (8).

4. Connecting and attachment piece for corrugated tubes according to one of patent claims 1 to 3, **characterised in that** the thermoplastic plastics material is a plastics material from the polyamide (PA) group or polypropylene (PP) group.

5. Connecting and attachment piece for corrugated tubes according to one of patent claims 1 to 4, **characterised in that** the thermoplastic elastomeric plastics material is a plastics material from the polyurethane elastomer (TPE-U) group or the olefin elastomer (TPE-O) group or the amide elastomer (TPE-A) group or a cross-linked thermoplastic elastomer (TPE-X).

6. Connecting and attachment piece for corrugated tubes according to one of patent claims 2 to 5, **characterised in that** the sealing elements (13; 38) on the second housing part (10; 34; 37) extend between the inlet aperture (5) of the core cavity (4) and the radial retaining elements (22; 52) on the jacket segments (20; 50), wherein the sealing elements (13; 38) are disposed in a closed manner around the entire circumference of the core cavity (4).

7. Connecting and attachment piece for corrugated tubes according to one of patent claims 1 to 6, **characterised in that** a rigid jacket ring (24) is disposed around the inlet aperture (5) and this jacket ring (24) is connected, via longitudinal ribs (25), to the first housing part (33) and is formed from the same thermoplastic plastics material.

8. Connecting and attachment piece for corrugated tubes according to patent claim 2, **characterised in that** the tongue-shaped jacket segments (20; 50) are at least partially enclosed by the elastic plastics material of the second housing part (34; 37), and the free ends (21; 51) can be moved resiliently in the radial direction.

9. Connecting and attachment piece for corrugated tubes according to patent claim 3, **characterised in that** the connecting flange (7) on the first housing part (9; 33; 36) has axial openings (16), these openings (16) are filled up with thermoplastic elastomeric plastics material, and the sealing ring (15) and the second housing part (10; 34; 37) are connected to one another in one piece.

10. Connecting and attachment piece for corrugated tubes according to patent claim 2, **characterised in that** the free ends (21) of the tongue-shaped jacket segments (20) are directed, in the direction of the longitudinal axis (11), towards the connecting flange (7) of the first housing part (33).

11. Connecting and attachment piece for corrugated tubes according to patent claim 2, **characterised in that** outwardly directed gripping elements (27) are disposed on the free ends (21; 51) of the tongue-shaped jacket segments (20; 50).

## Revendications

1. Pièce de liaison et de raccordement (1) pour des liaisons détachables avec des tubes ondulés (2), comprenant un boîtier coulé par injection (3 ; 32 ; 35) en matière plastique qui comporte une enveloppe de forme tubulaire non divisée en direction périphérique avec une cavité centrale (4) et une ouverture d'entrée (5) pour enfiler une extrémité (6) d'un tube ondulé dans la cavité centrale (4) ainsi que pour la traversée de câbles, et comprenant une bride de liaison (7) et une pièce de liaison (8), **caractérisée en ce que** le boîtier de forme tubulaire (3 ; 32 ; 35) non divisé est formé dans la direction de l'axe longitudinal (11) par deux parties de boîtier (9, 10 ; 33, 34 ; 36, 37) qui sont reliées d'un seul tenant l'une à l'autre sous forme d'une pièce coulée par injection à deux composants, dont une première partie de boîtier (9 ; 33 ; 36) dure est formée avec la bride de liaison (7) en matière thermoplastique, et une deuxième partie de boîtier (10 ; 34 ; 37) élastique, qui est essentiellement orientée vers l'ouverture d'entrée (5) pour l'extrémité (6) du tube ondulé, est en une matière élastomère thermoplastique, des pièces additionnelles de la première partie de boîtier (9, 33 ; 36) s'engageant en direction de l'axe longitudinal (11) dans la deuxième partie de boîtier (10 ; 34 ; 37), et forment des nervures de renforcement (24, 25, 27) pour cette deuxième partie de boîtier (10 ; 34 ; 37), et la deuxième partie de boîtier (10 ; 34 ; 37) comprend au moins une zone (12) avec des éléments d'étanchement (13) dirigés vers la cavité centrale.

2. Pièce de liaison et de raccordement pour tubes ondulés selon la revendication 1, **caractérisée en ce que** la première partie de boîtier comprend au moins deux segments d'enveloppe (20 ; 50) en forme de languettes qui s'étendent en direction de l'axe longitudinal, et **en ce que** ces segments d'enveloppe (20 ; 50) présentent à leurs extrémités libres (21 ; 51) des éléments de retenue (22 ; 52) qui sont dirigés approximativement perpendiculairement à l'axe longitudinal (11), et dont les régions terminales intérieures (23 ; 53) pénètrent dans la cavité centrale (4).

3. Pièce de liaison et de raccordement pour tubes ondulés selon la revendication 1 ou 2, **caractérisée en ce que**, sur une surface radiale (14) de la bride de liaison (7) qui est dirigée vers la pièce de liaison (8), une bague d'étanchement (15) est surmoulée par injection à partir de la matière élastomère thermoplastique de la deuxième partie de boîtier (10 ; 34 ; 37).

4. Pièce de liaison et de raccordement pour tubes ondulés selon l'une des revendications 1 à 3, **caractérisée en ce que** la matière thermoplastique est une matière plastique du groupe des polyamides (PA) ou des polypropylènes (PP).

5. Pièce de liaison et de raccordement pour tubes ondulés selon l'une des revendications 1 à 4, **caractérisée en ce que** la matière élastomère thermoplastique est une matière plastique du groupe des élastomères polyuréthanes (TPE-U) ou des élastomères oléfines (TPE-O) ou des élastomères amides (TPE-A) ou un élastomère thermoplastique réticulé (TPE-X).

6. Pièce de liaison et de raccordement pour tubes ondulés selon l'une des revendications 2 à 5, **caractérisée en ce que** les éléments d'étanchement (13 ; 38) sur la deuxième partie de boîtier (10 ; 34 ; 37) s'étendent entre l'ouverture d'entrée (5) de la cavité centrale (4) et les éléments de retenue radiaux (22 ; 52) sur les segments d'enveloppe (20 ; 50), les éléments d'étanchement (13 ; 38) étant agencés de façon fermée autour de toute la périphérie de la cavité centrale (4).

7. Pièce de liaison et de raccordement pour tubes ondulés selon l'une des revendications 1 à 6, **caractérisée en ce qu'**une bague enveloppe rigide (24) est agencée autour de l'ouverture d'entrée (5), et cette bague enveloppe (24) est reliée via des nervures longitudinales (25) à la première partie de boîtier (33) et est formée de la même matière thermoplastique.

8. Pièce de liaison et de raccordement pour tubes ondulés selon la revendication 2, **caractérisée en ce que** les segments d'enveloppe (20 ; 50) en forme de languettes sont entourés au moins partiellement par la matière plastique élastique de la deuxième partie de boîtier (34 ; 37), et les extrémités libres (21 ; 51) sont déplaçables avec effet élastique en direction radiale.

9. Pièce de liaison et de raccordement pour tubes ondulés selon la revendication 3, **caractérisée en ce que** la bride de liaison (7) sur la première partie de boîtier (9 ; 33 ; 36) présente des traversées axiales (16), lesdites traversées (16) sont remplies de matière élastomère thermoplastique, et la bague d'étanchement (15) et la deuxième partie de boîtier (10 ; 34 ; 37) sont reliées l'une à l'autre d'un seul tenant.

10. Pièce de liaison et de raccordement pour tubes ondulés selon la revendication 2, **caractérisée en ce que** les extrémités libres (21) des segments d'enveloppe (20) en forme de languettes sont orientées en direction de l'axe longitudinal (11) vers la bride de liaison (7) de la première partie de boîtier (33).

11. Pièce de liaison et de raccordement tubes ondulés selon la revendication 2, **caractérisée en ce que** des éléments d'agrippement (27) dirigés vers l'extérieur sont agencés aux extrémités libres (21 ; 51) des segments d'enveloppe (20 ; 50) en forme de languettes.
